Europäisches Patentamt

European Patent Office

Office européen des brevets

(19)

(11) **EP 1 182 314 A2**

(12) # EUROPEAN PATENT APPLICATION

(43) Date of publication:
**27.02.2002  Bulletin 2002/09**

(51) Int Cl.⁷: **E05B 49/00**

(21) Application number: **01202923.7**

(22) Date of filing: **01.08.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **23.08.2000  US 227407 P
18.06.2001  US 883756**

(71) Applicant: **Siemens Automotive Corporation
Auburn Hills, Michigan 48326-2980 (US)**

(72) Inventor: **Morrison, Brian
Harrison Township, Michigan 48045 (US)**

(74) Representative: **Neill, Andrew Peter et al
Siemens Shared Services Limited, IPD, Siemens
House, Oldbury
Bracknell, Berkshire RG12 8FZ (GB)**

(54) **Remote signal transmission control including compensation for variations in transmitter components**

(57)  A transmitter, particularly useful for a remote keyless entry system, includes a less expensive oscillator. A strategy for compensating for tolerance variations caused by the less expensive components includes sending out a test signal with an expected signal profile. The test signal is then received and analyzed to compare it to the expected signal profile. Variations in timing characteristics of the signal compared to the expected characteristics are utilized to determine correction factors that are then programmed into a microprocessor of the transmitter so that subsequent signal transmissions will track an expected signal profile.

Fig-1

Printed by Jouve, 75001 PARIS (FR)

**Description**

## BACKGROUND OF THE INVENTION

This invention generally relates to signal transmitters used for providing radio frequency signals to remotely located receivers. More particularly, this invention relates to a strategy for controlling signal transmission to compensate for variations in transmitter components.

A variety of remote signal communication systems are in use today. Radio frequency signals have become a communication mode of choice in a number of areas. One example includes remote keyless entry systems for vehicles. Such systems typically include a handheld transmitter, such as a key fob or "smart card" that provides a signal to a receiver located on the vehicle.

While such systems are in wide spread use, there is always need for improvement. One challenge facing designers of such systems is reducing the cost of the transmitter or receiver components while maintaining appropriate signal tolerances and accuracy. Better signal control is available with more expensive components. Cost savings, however, is a primary concern in providing such systems to OEM's. Accordingly, suppliers are constantly striving to minimize the cost of such systems. Minor differences in cost per unit typically represent the deciding factor between competitive bids for such projects.

This invention addresses the need for reducing the cost of a transmitter of a remote keyless entry system while accommodating for the associated reduction in signal control.

## SUMMARY OF THE INVENTION

In general terms, this invention is a strategy for adjusting the operating parameters of a transmitter to compensate for reductions in signal control associated with using less expensive components. A method of controlling signal transmission in a system designed according to this invention includes generating a test signal from a transmitter that has an expected timing characteristic. A determination is made whether the actual timing characteristic of the test signal matches the expected timing characteristic. A correction factor is then determined that utilizes a difference between the actual and expected timing characteristics. A microprocessor portion of the transmitter is then programmed to utilize the correction factor in subsequent signal transmissions so that the actual timing characteristic is within an acceptable tolerance level from the desired timing characteristic.

In one example system designed according to this invention, the transmitter is used as part of a remote keyless entry system for a vehicle. The transmitter includes an oscillator that comprises relatively inexpensive components. In one example, at least a portion of the oscillator is resident within the microprocessor. A transmitting portion of the transmitter transmits a signal having a desired timing characteristic. The transmitting portion is driven by a feed signal from the microprocessor. The microprocessor is programmed to alter a baud rate of the feed signal to compensate for any difference between the desired timing characteristic and an actual timing characteristic of the transmitted signal.

In one example, a timer coefficient of a timer portion of the microprocessor is altered based upon a difference between the desired timing characteristic and the actual timing characteristic.

The various features and advantages of this invention will become apparent to those skilled in the art from the following detailed description of the currently preferred embodiment. The drawings that accompany the detailed description can be briefly described as follows.

## BRIEF DESCRIPTION OF THE DRAWINGS

Figure 1 schematically illustrates a system designed according to this invention.

Figure 2 schematically illustrates in somewhat more detail selected portions of a transmitter for use in a system designed according to this invention.

## DETAILED DESCRIPTION OF THE PREFERRED EMBODIMENTS

A remote keyless entry system 20 for a vehicle 22 includes a transmitter 24. In one example, the transmitter 24 is a key fob having one or more switches that are activated by a user to generate a signal that is received by a receiver 26 supported on the vehicle 22. In another example, the transmitter 24 is a passive transmission device that does not require any switch activation by a user, a so-called "smart card."

The system 20 operates in a conventional manner such that signal transmissions between the transmitter 24 and receiver 26 result in appropriate action at the vehicle such as unlocking the trunk or door locks.

This invention focuses upon reducing the costs associated with the transmitter 24. This invention strikes a balance between the need for a less expensive transmitter and the need for accurate signal control of the transmitted signals.

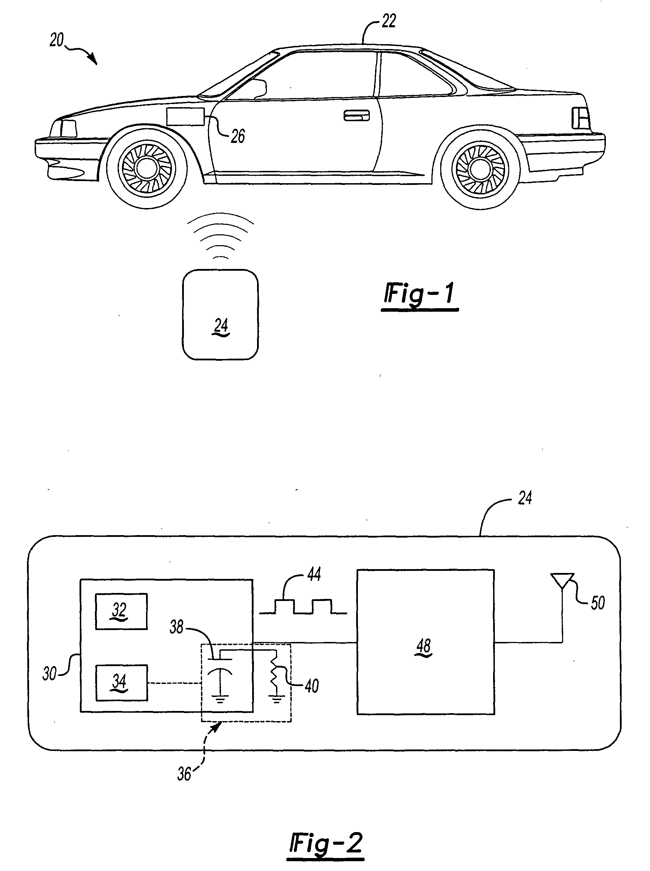

Figure 2 schematically illustrates selected portions of the transmitter 24. A microprocessor 30 includes a memory portion such as an EEPROM. A timer portion 34 operates as an internal clock in the microprocessor. An oscillator 36 provides the electrical energy for driving the clock 34.

In the illustrated example, the oscillator 36 comprises a capacitive element such as a capacitor 38 resident within the microprocessor 30. A resistive element such as a resistor 40 is appropriately coupled to the capacitive element to provide an RC oscillator, which operates as known in the art. Another example oscillator 36 includes an RC resonator that is entirely external to the microprocessor 30. Other oscillator arrangements may be used.

A primary goal of this invention is to reduce the cost of the transmitter 24 and, therefore, the just-mentioned example oscillators are preferred. Such oscillators are recognized as being less expensive but having wider tolerance ranges. For example, the external RC resonator typically has a tolerance or variation range of approximately ten percent. The illustrated resonator 36 having an internal capacitor 38 and external resistor 40 typically has a tolerance or variation range of approximately twenty percent. By contrast, a more expensive crystal oscillator has a tolerance of approximately one percent.

The microprocessor 30 provides a drive signal 44 to a transmitting portion 48, which includes hardware as known in the art for generating a radio frequency signal. The generated signal is transmitted by an antenna 50 to the receiver 26 in a known manner.

The nature of the less expensive oscillator 36 introduces the possibility for variations in the actual operating frequency of the components within the transmitter 24. For example, the frequency of the drive signal 44 may not be what is expected. This invention addresses the need for controlling a timing characteristic of the transmitted signal so that the signal matches an expected profile.

To compensate for variations in the signal frequency caused by the lower tolerance of the oscillator 36, this invention includes operating the transmitter 24 in a test mode. A test signal is transmitted that is supposed to have a known characteristic. In one example, the test signal is expected to have a 1 KHz frequency and a fifty percent duty cycle. The transmitted test signal is received by a signal analyzer (not illustrated). The timing characteristics or profile of the test signal are then compared to expected values. Variations from the expected values are determined and utilized to determine a correction factor that is then programmed into the memory portion 32 of the microprocessor 30. The correction factor adjusts the baud rate used by the microprocessor 36 for generating the feed signal 44 to compensate for variations in the operation of the timer portion caused by the lower tolerance of the oscillator 36.

In one example, the test signal, as mentioned, is a 1 KHz, fifty percent duty cycle signal. In this instance, with the illustrated example, a transfer equation that is used to determine the correction factor is as follows:

$$\text{correction factor} = 124 \times \text{actual frequency} \div 1{,}000 \text{ Hz}$$

Using the above example, if a test signal has a measured frequency of 800 Hz, the determined timer correction factor is 99. If the measured frequency of the test signal were 1,100 Hz, the timer correction factor is 136.

The timer correction factor preferably is programmed into the memory portion 32 of the microprocessor 30 so that the microprocessor subsequently operates to generate the feed signal 44 in a manner that results in the expected characteristics of the transmitted signal. In other words, differences in operation of the timer portion 34 caused by an oscillator 36 that is out of an acceptable tolerance range are compensated for by adjusting the baud rate utilized by the microprocessor 30.

The difference between the actual and expected frequency, therefore, provides information regarding an adjustment that needs to be made to the operation of the microprocessor 30 when generating the feed signal 44 that will compensate for variations in the performance of the timer 34 so that the resulting transmitted signal matches, or is at least within an acceptable tolerance range of difference from, the expected signal.

In another example, this invention provides the ability to compensate for distortions in the duty cycle of the transmitted signal as may be caused by the hardware associated with the transmitting portion 48. In this example, the test signal is received and analyzed and when the duty cycle does not correspond to an expected duty cycle, a correction coefficient is determined that will alter the baud rate of the feed signal 44 to accommodate for the distortions caused within the transmitting portion 48.

Given this description, those skilled in the art will be able to develop appropriate algorithms for determining correction factors that will meet the needs of their particular situation. Similarly, those skilled in the art who have the benefit of this description will be able to appropriately program a microprocessor to accommodate for variations caused by a selection of less expensive components consistent with this invention.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of controlling signal transmission from a transmitter having an oscillator, a transmitter portion and a microprocessor that drives the transmitter portion, comprising the steps of:

    (A) generating a test signal having an expected timing characteristic;

(B) determining whether the actual timing characteristic of the test signal corresponds to the expected timing characteristic;

(C) determining a correction factor using a difference between the actual and expected timing characteristics; and

(D) causing the microprocessor to utilize the correction factor in subsequent signal transmissions.

2. The method of claim 1, wherein step (D) includes programming the microprocessor to alter the timing of signal generation.

3. The method of claim 1, wherein the timing characteristic is a duty cycle of the signal.

4. The method of claim 3, including determining an amount of distortion of the duty cycle caused by the transmitter portion and using the amount of distortion to determine the correction factor.

5. The method of claim 1, wherein the timing characteristic is a frequency of the signal.

6. The method of claim 5, including determining an amount of distortion of the frequency caused by the oscillator and using the amount of distortion to determine the correction factor.

7. The method of claim 1, wherein the timing characteristic includes a duty cycle and a frequency of the signal and including using a first correction factor to compensate for any difference between the actual duty cycle and the expected duty cycle and a second correction factor to compensate for any difference between the actual frequency and an expected frequency.

8. The method of claim 1, wherein step (D) includes programming the microprocessor to use a different baud rate for signal transmission than a baud rate used when performing step (A).

9. The method of claim 1, including determining a timer coefficient that uses a timer operation characteristic of a timer within the microprocessor and applying the timer coefficient to the baud rate of signal generation.

10. The method of claim 1, wherein step (D) includes altering a baud rate used by the microprocessor when generating a feed signal that drives the transmitter portion.

11. A transmitter for use in a remote keyless entry system, comprising:

a microprocessor;

an oscillator that is at least partially resident within the microprocessor; and

a transmitting portion that transmits a signal having a desired timing characteristic for receipt by a remotely located receiver, the transmitting portion being driven by a feed signal from the microprocessor and the microprocessor being programmed to alter a baud rate used to generate the feed signal to compensate for a difference between the desired timing characteristic and an actual timing characteristic of the transmitted signal.

12. The transmitter of claim 11, wherein the oscillator comprises an RC oscillator having a capacitive element within the microprocessor and a resistive element coupled with the capacitive element.

13. The transmitter of claim 12, wherein the resistive element is outside of the microprocessor.

14. A method of controlling signal transmission in a remote keyless entry system that includes a transmitter having a microprocessor, a transmitter portion that is driven by the microprocessor and an oscillator that is at least partially within the microprocessor, comprising the steps of:

(A) generating a test signal having an expected frequency;

(B) determining whether the actual frequency of the test signal matches the expected frequency;

(C) determining a correction factor using a difference between the actual and expected frequencies; and

(D) causing the microprocessor to utilize the correction factor in subsequent signal transmissions.

15. The method of claim 14, wherein step (C) includes determining an amount of distortion of the frequency caused by the oscillator and using the amount of distortion to determine the correction factor.

16. The method of claim 14, wherein step (D) includes programming the microprocessor to use a different baud rate for signal generation than a baud rate used when performing step (A).

17. The method of claim 16, including determining a timer coefficient that uses a timer operation characteristic of a timer within the microprocessor and applying the timer coefficient to the baud rate of signal generation.

*Fig-1*

*Fig-2*